(19) **Europäisches Patentamt / European Patent Office / Office européen des brevets**

(11) **EP 2 421 705 B1**

(12) **FASCICULE DE BREVET EUROPEEN**

(45) Date de publication et mention de la délivrance du brevet:
**07.03.2018 Bulletin 2018/10**

(21) Numéro de dépôt: **10723702.6**

(22) Date de dépôt: **19.04.2010**

(51) Int Cl.:
**B32B 17/10** (2006.01)     **C03C 27/12** (2006.01)
**G10K 11/168** (2006.01)

(86) Numéro de dépôt international:
**PCT/FR2010/050749**

(87) Numéro de publication internationale:
**WO 2010/122260 (28.10.2010 Gazette 2010/43)**

(54) **PROCEDE DE FABRICATION D'UN VITRAGE FEUILLETE ET VITRAGE FEUILLETE**

VERFAHREN ZUR DIMENSIONIERUNG EINER VERBUNDVERGLASUNG UND VERBUNDVERGLASUNG

METHOD OF DIMENSIONING A LAMINATED GLAZING AND LAMINATED GLAZING

(84) Etats contractants désignés:
**AT BE BG CH CY CZ DE DK EE ES FI FR GB GR HR HU IE IS IT LI LT LU LV MC MK MT NL NO PL PT RO SE SI SK SM TR**

(30) Priorité: **20.04.2009 FR 0952567**

(43) Date de publication de la demande:
**29.02.2012 Bulletin 2012/09**

(73) Titulaire: **Saint-Gobain Glass France
92400 Courbevoie (FR)**

(72) Inventeurs:
• **MILAMON, Christophe
F-60310 Plessis de Roye (FR)**

• **LEVASSEUR, Fabien
F-60490 MAREST SUR MATZ (FR)**
• **NUGUE, Jean-Clément
F-60260 Lamorlaye (FR)**

(74) Mandataire: **Saint-Gobain Recherche
Département Propriété Industrielle
39 Quai Lucien Lefranc
93300 Aubervilliers (FR)**

(56) Documents cités:
EP-A2- 1 151 855     WO-A1-2007/135317
FR-A1- 2 838 517     US-A1- 2003 118 840
US-B1- 6 432 522

EP 2 421 705 B1

**Description**

La présente invention a trait à un procédé de fabrication d'un vitrage feuilleté qui comporte au moins un substrat à fonction verrière et au moins un intercalaire polymérique. L'invention a également trait à un vitrage feuilleté et à un intercalaire polymérique pour un vitrage feuilleté.

Au sens de l'invention, un substrat à fonction verrière désigne un substrat en verre et/ou en plastique, où on entend par substrat en plastique un substrat contenant une ou plusieurs substances polymères organiques de haut poids moléculaire. De plus, un intercalaire polymérique est un intercalaire monolithique ou un intercalaire composite constitué par l'assemblage de plusieurs éléments polymériques sous forme de couches, résines ou films. Au sens de l'invention, on entend également par vitrage feuilleté toute structure de vitrage comprenant au moins un substrat à fonction verrière et au moins un intercalaire, y compris une structure comprenant un substrat unique et un intercalaire unique associés entre eux.

Les vitrages feuilletés, du fait de leurs bonnes propriétés de résistance mécanique, sont classiquement utilisés pour équiper des véhicules ou des bâtiments. A titre d'exemples, les vitrages feuilletés comprennent les vitrages pour véhicules, notamment automobiles, en particulier les pare-brises, les vitrages de façade de bâtiments ou les modules photovoltaïques, qui comportent au moins un substrat en verre et une ou plusieurs cellules photovoltaïques solidarisées avec le substrat par l'intermédiaire d'un intercalaire de feuilletage. L'intercalaire d'un vitrage feuilleté joue un rôle primordial pour la résistance mécanique du vitrage. En particulier, lors d'un choc, avant la rupture du verre, l'intercalaire permet avantageusement d'absorber une partie de l'énergie par dissipation visqueuse. De plus, l'intercalaire assure en grande partie le maintien de la structure du vitrage lorsque le verre est totalement fissuré, ce qui permet, grâce à l'adhérence des morceaux de verre sur l'intercalaire et la rétention structurelle de l'assemblage à son support, d'éviter la projection d'éclats de verre et par conséquent la blessure de personnes.

L'intercalaire d'un vitrage feuilleté peut également être sélectionné pour présenter, en plus de ses propriétés mécaniques, des propriétés d'isolation acoustique, notamment pour les vitrages feuilletés destinés à équiper des véhicules et des bâtiments, en vue d'atténuer la perception des bruits aériens et/ou solidiens parvenant via le vitrage au sein de l'habitacle. Par exemple, le butyral de polyvinyle (PVB), qui est un intercalaire couramment utilisé pour ses performances mécaniques, peut également assurer au vitrage feuilleté des performances acoustiques lorsque sa composition est bien adaptée.

Les vitrages feuilletés de bâtiment et d'automobile doivent satisfaire à des exigences normatives quant à leur résistance mécanique et, en particulier, présenter une bonne résistance aux chocs, qu'il s'agisse de heurts accidentels, de chutes d'objets ou de personnes, ou encore de jets d'objets comme lors d'actes de vandalisme ou d'effraction ou de tirs balistiques. Les vitrages feuilletés doivent remplir des critères de résistance à des chocs mous (classes 1 B1 et 2B2 de la norme EN 12600), ou à des chocs durs (norme R43, norme EN 356). Les vitrages feuilletés fabriqués industriellement sont actuellement formés à partir de substrats et d'intercalaires présentant des épaisseurs standardisées, les performances de résistance mécanique requises étant obtenues par la superposition de plusieurs plis d'intercalaires d'épaisseur standard. Or, un tel mode de fabrication de vitrages feuilletés, avec une épaisseur d'intercalaire qui est un multiple d'une épaisseur connue, conduit bien souvent à un surdimensionnement des vitrages feuilletés. Il en résulte un surcoût et un surpoids de ces vitrages feuilletés. De plus, ce mode de fabrication par superposition de plis d'intercalaires d'épaisseur standard ne permet pas d'ajuster librement la structure des vitrages feuilletés pour améliorer d'autres propriétés des vitrages feuilletés lorsque nécessaires, telles que la transmission lumineuse des assemblages, au niveau d'une ou des faces du laminat.

C'est à ces inconvénients qu'entend plus particulièrement remédier l'invention en proposant un procédé de fabrication d'un vitrage feuilleté qui garantit que le vitrage feuilleté obtenu est, d'une part, adapté pour résister à des efforts prédéterminés correspondant à des exigences normatives et, d'autre part, dimensionné avec des épaisseurs de substrat et d'intercalaire optimisées au regard des besoins de résistance mécanique, ces épaisseurs optimisées correspondant à une épaisseur totale minimisée du vitrage feuilleté.

A cet effet, l'invention a pour objet un procédé de fabrication d'un vitrage feuilleté pour qu'il résiste à des efforts prédéterminés, le vitrage feuilleté comportant au moins un substrat à fonction verrière de composition chimique donnée et au moins un intercalaire polymérique de composition chimique donnée, caractérisé en ce qu'il comprend des étapes dans lesquelles :

- on identifie un vitrage feuilleté de référence, qui résiste aux efforts prédéterminés et qui comporte au moins un substrat et un intercalaire de mêmes compositions chimiques que ceux du vitrage feuilleté à fabriquer ;
- on détermine la résistance à la déchirure de l'intercalaire du vitrage feuilleté de référence, l'épaisseur d'intercalaire du vitrage feuilleté de référence et l'épaisseur de substrat du vitrage feuilleté de référence ;
- à l'aide d'un graphique représentatif de la résistance à la déchirure d'intercalaire minimale requise pour qu'un vitrage feuilleté quelconque, comportant au moins un substrat et un intercalaire de mêmes compositions chimiques que ceux du vitrage feuilleté à fabriquer, résiste aux efforts prédéterminés, en fonction de l'épaisseur d'intercalaire du vitrage feuilleté quelconque et/ou de l'épaisseur de substrat du vitrage feuilleté quelconque, on déduit une combinaison de valeurs optimales de l'épaisseur d'intercalaire et de l'épaisseur de substrat qui correspond à une valeur de résistance à la déchirure d'intercalaire minimale requise égale à la résistance à la déchirure de l'intercalaire du vitrage feuilleté de référence ;

- on dimensionne le vitrage feuilleté avec une épaisseur choisie d'intercalaire supérieure ou égale à ladite valeur optimale d'épaisseur d'intercalaire et une épaisseur choisie de substrat supérieure ou égale à ladite valeur optimale d'épaisseur de substrat.

Au sens de l'invention, une combinaison de valeurs optimales de l'épaisseur d'intercalaire et de l'épaisseur de substrat est une combinaison pour laquelle le vitrage feuilleté résiste aux efforts prédéterminés et l'épaisseur totale du vitrage feuilleté est minimisée. De plus, lorsque le vitrage feuilleté comporte plusieurs substrats à fonction verrière, l'expression "de composition chimique donnée" signifie que tous ces substrats à fonction verrière ont la même composition chimique, qui est ladite composition chimique donnée. De la même façon, lorsque le vitrage feuilleté comporte plusieurs films d'intercalaire polymérique, l'expression "de composition chimique donnée" signifie que tous ces films d'intercalaire ont la même composition chimique, qui est ladite composition chimique donnée.

Selon d'autres caractéristiques avantageuses d'un procédé conforme à l'invention, prises isolément ou selon toutes les combinaisons techniquement possibles :

○ On dimensionne le vitrage feuilleté avec une épaisseur choisie de substrat égale à l'épaisseur de substrat du vitrage feuilleté de référence et le procédé comprend des étapes dans lesquelles :

- à l'aide d'un graphique représentatif de la résistance à la déchirure d'intercalaire minimale requise pour qu'un vitrage feuilleté quelconque, comportant au moins un substrat et un intercalaire de mêmes compositions chimiques que ceux du vitrage feuilleté à fabriquer, résiste aux efforts prédéterminés, en fonction de l'épaisseur d'intercalaire du vitrage feuilleté quelconque, ce graphique étant établi pour une épaisseur de substrat du vitrage feuilleté quelconque égale à l'épaisseur de substrat dans le vitrage feuilleté de référence, on déduit l'épaisseur d'intercalaire minimale requise qui correspond à une valeur de résistance à la déchirure d'intercalaire minimale requise égale à la résistance à la déchirure de l'intercalaire du vitrage feuilleté de référence ;
- on dimensionne le vitrage feuilleté avec une épaisseur choisie d'intercalaire supérieure ou égale à ladite épaisseur d'intercalaire minimale requise et une épaisseur choisie de substrat égale à l'épaisseur de substrat du vitrage feuilleté de référence.

○ On dimensionne le vitrage feuilleté avec une épaisseur choisie d'intercalaire égale à l'épaisseur d'intercalaire du vitrage feuilleté de référence et le procédé comprend des étapes dans lesquelles :

- à l'aide d'un graphique représentatif de la résistance à la déchirure d'intercalaire minimale requise pour qu'un vitrage feuilleté quelconque, comportant au moins un substrat et un intercalaire de mêmes compositions chimiques que ceux du vitrage feuilleté à fabriquer, résiste aux efforts prédéterminés, en fonction de l'épaisseur de substrat du vitrage feuilleté quelconque, ce graphique étant établi pour une épaisseur d'intercalaire du vitrage feuilleté quelconque égale à l'épaisseur d'intercalaire du vitrage feuilleté de référence, on déduit l'épaisseur de substrat minimale requise qui correspond à une valeur de résistance à la déchirure d'intercalaire minimale requise égale à la résistance à la déchirure de l'intercalaire du vitrage feuilleté de référence ;
- on dimensionne le vitrage feuilleté avec une épaisseur choisie d'intercalaire égale à l'épaisseur d'intercalaire du vitrage feuilleté de référence et une épaisseur choisie de substrat supérieure ou égale à l'épaisseur de substrat minimale requise.

○ L'une au moins des épaisseurs choisies est strictement inférieure à l'épaisseur correspondante du vitrage feuilleté de référence.
○ Préalablement au dimensionnement du vitrage feuilleté pour qu'il résiste aux efforts prédéterminés, on trace le graphique représentatif de la résistance à la déchirure d'intercalaire minimale requise pour qu'un vitrage feuilleté quelconque, comportant au moins un substrat et un intercalaire de mêmes compositions chimiques que ceux du vitrage feuilleté à fabriquer, résiste aux efforts prédéterminés, en fonction de l'épaisseur d'intercalaire du vitrage feuilleté quelconque et/ou de l'épaisseur de substrat du vitrage feuilleté quelconque, à partir d'essais de résistance mécanique réalisés sur des vitrages feuilletés de compositions différentes en termes d'épaisseur d'intercalaire et/ou d'épaisseur de substrat.
○ Préalablement au dimensionnement du vitrage feuilleté pour qu'il résiste aux efforts prédéterminés, on vérifie que l'adhésion de l'intercalaire du vitrage feuilleté à fabriquer vis-à-vis du substrat de ce vitrage feuilleté est satisfaisante.
○ On vérifie que l'adhésion de l'intercalaire du vitrage feuilleté à fabriquer vis-à-vis du substrat de ce vitrage feuilleté est satisfaisante en réalisant une torsion d'un échantillon de l'intercalaire solidaire du substrat, en mesurant la force de torsion pour laquelle la dissociation de l'intercalaire avec le substrat est amorcée, en calculant à partir de cette force la contrainte de cisaillement d'adhésion correspondante, et en comparant cette valeur de la contrainte d'adhésion à une plage de valeurs admissibles pour qu'un vitrage feuilleté quelconque résiste aux efforts prédéterminés.

∘ On identifie le vitrage feuilleté de référence qui résiste aux efforts prédéterminés en réalisant un essai de résistance mécanique sur le vitrage feuilleté de référence.

∘ On détermine la résistance à la déchirure de l'intercalaire du vitrage feuilleté de référence par la méthode de Tielking.

∘ Préalablement au dimensionnement du vitrage feuilleté pour qu'il résiste aux efforts prédéterminés, on vérifie que les propriétés d'isolation acoustique de l'intercalaire du vitrage feuilleté à fabriquer sont satisfaisantes.

∘ Les propriétés d'isolation acoustique de l'intercalaire du vitrage feuilleté à fabriquer sont satisfaisantes lorsque l'intercalaire possède un facteur de perte $\tan\delta$ supérieur à 0,6 et un module de cisaillement G' inférieur à $2.10^7$ N/m$^2$, pour une température de 20°C et une fréquence de 50 Hz.

Selon d'autres caractéristiques avantageuses d'un vitrage feuilleté conforme à l'invention :

∘ Pour une épaisseur de substrat donnée, son épaisseur d'intercalaire est supérieure ou égale à une valeur d'épaisseur d'intercalaire minimale requise, dans une limite de 20% au-dessus de cette valeur, où la combinaison de l'épaisseur de substrat donnée et de l'épaisseur d'intercalaire minimale requise correspond à une valeur de résistance à la déchirure d'intercalaire minimale requise pour qu'un vitrage feuilleté quelconque, comportant au moins un substrat ayant ladite composition chimique de substrat donnée et un intercalaire ayant ladite composition chimique d'intercalaire donnée, résiste aux efforts prédéterminés.

∘ Pour une épaisseur d'intercalaire donnée, son épaisseur de substrat est supérieure ou égale à une valeur d'épaisseur de substrat minimale requise, dans une limite de 20% au-dessus de cette valeur, où la combinaison de l'épaisseur d'intercalaire donnée et de l'épaisseur de substrat minimale requise correspond à une valeur de résistance à la déchirure d'intercalaire minimale requise pour qu'un vitrage feuilleté quelconque, comportant au moins un substrat ayant ladite composition chimique de substrat donnée et un intercalaire ayant ladite composition chimique d'intercalaire donnée, résiste aux efforts prédéterminés.

∘ Son intercalaire possède un facteur de perte $\tan\delta$ supérieur à 0,6 et un module de cisaillement G' inférieur à $2.10^7$ N/m$^2$, pour une température de 20°C et une fréquence de 50 Hz.

∘ Le vitrage feuilleté est adapté pour résister aux efforts correspondant à la classe 1B1 de la norme EN 12600 et comporte deux substrats en verre d'épaisseur 3 mm et un intercalaire en PVB d'épaisseur $e_i$ telle que 0,5 mm $\leq e_i \leq$ 0,74 mm disposé de manière solidaire entre les substrats en verre.

∘ Le vitrage feuilleté est adapté pour résister aux efforts correspondant à la classe 2B2 de la norme EN 12600 et comporte deux substrats en verre d'épaisseur 3 mm et un intercalaire en PVB d'épaisseur $e_i$ telle que 0,25 mm $\leq e_i \leq$ 0,36 mm disposé de manière solidaire entre les substrats en verre.

∘ Le vitrage feuilleté est adapté pour résister aux efforts correspondant à la norme R43 et comporte deux substrats en verre d'épaisseurs respectives $e_{g1}$ = 1,8 mm et $e_{g2}$ = 1,4 mm et un intercalaire en PVB d'épaisseur $e_i$ telle que 0,4 mm $\leq e_i \leq$ 0,74 mm disposé de manière solidaire entre les substrats en verre.

Au sens de l'invention, on entend par épaisseur d'intercalaire l'épaisseur nominale de l'intercalaire, l'intercalaire pouvant présenter localement des variations d'épaisseur autour de la valeur d'épaisseur nominale.

Selon d'autres caractéristiques avantageuses d'un intercalaire conforme à l'invention :

∘ L'intercalaire en PVB pour un vitrage feuilleté destiné à résister aux efforts correspondant à la classe 1 B1 de la norme EN 12600 a une épaisseur $e_i$ telle que 0,5 mm $\leq e_i \leq$ 0,74 mm.

∘ L'intercalaire en PVB pour un vitrage feuilleté destiné à résister aux efforts correspondant à la classe 2B2 de la norme EN 12600 a une épaisseur $e_i$ telle que 0,25 mm $\leq e_i \leq$ 0,36 mm.

∘ L'intercalaire en PVB pour un vitrage feuilleté destiné à résister aux efforts correspondant à la norme R43 a une épaisseur $e_i$ telle que 0,4 mm $\leq e_i \leq$ 0,74 mm.

Les caractéristiques et avantages de l'invention apparaîtront dans la description qui va suivre de plusieurs modes de réalisation d'un procédé de dimensionnement d'un vitrage feuilleté selon l'invention, donnée uniquement à titre d'exemple et faite en se référant aux dessins annexés dans lesquels :

- la figure 1 est une coupe d'un vitrage feuilleté comportant deux substrats à fonction verrière et un intercalaire polymérique ;
- la figure 2 est un graphique représentatif de la résistance à la déchirure d'intercalaire minimale requise pour qu'un vitrage feuilleté résiste aux efforts correspondant aux classes 1 B1 et 2B2 de la norme EN 12600, en fonction de l'épaisseur d'intercalaire du vitrage feuilleté, établi pour un vitrage feuilleté comportant deux substrats en verre d'épaisseur 3 mm et un intercalaire de contrainte d'adhésion comprise entre, respectivement, 3,1 MPa et 6,8 MPa pour la classe 1 B1, et 4 MPa et 9,6 MPa pour la classe 2B2 ;

- la figure 3 est un graphique analogue au graphique de la figure 2, représentatif de la résistance à la déchirure d'intercalaire minimale requise pour qu'un vitrage feuilleté résiste aux efforts correspondant à la norme R43, en fonction de l'épaisseur d'intercalaire du vitrage feuilleté, établi pour un vitrage feuilleté comportant deux substrats en verre d'épaisseur 2,1 mm et un intercalaire de contrainte d'adhésion comprise entre 2 MPa et 5 MPa et pour une hauteur de chute de 4 m ;

- la figure 4 est un graphique en trois dimensions, représentatif de la résistance à la déchirure d'intercalaire minimale requise pour qu'un vitrage feuilleté résiste aux efforts correspondant à la norme R43, en fonction à la fois de l'épaisseur d'intercalaire et de l'épaisseur de substrat du vitrage feuilleté, établi pour un vitrage feuilleté comportant un intercalaire de contrainte d'adhésion comprise entre 2 MPa et 5 MPa et pour une hauteur de chute de 4 m;

- la figure 5 est une vue de face schématique d'un dispositif expérimental pour évaluer l'adhésion d'un intercalaire vis-à-vis de substrats auxquels il est associé ;

- la figure 6 est une vue en perspective d'une variante de dispositif pour évaluer l'adhésion d'un intercalaire vis-à-vis de substrats auxquels il est associé ; et

- la figure 7 est une vue schématique d'un dispositif expérimental pour évaluer la résistance à la déchirure d'un intercalaire.

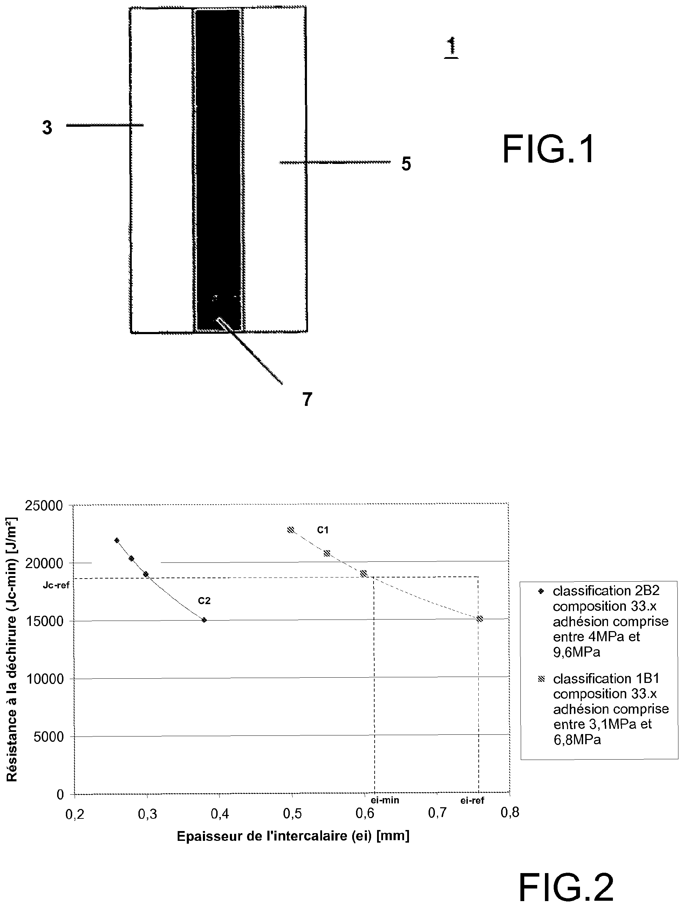

Dans le premier mode de réalisation du procédé de fabrication selon l'invention, illustré par le graphique de la figure 2, on cherche à dimensionner un vitrage feuilleté pour qu'il résiste à des chocs mous (classes 1 B1 et 2B2 de la norme EN 12600). A titre d'exemple et comme représenté sur la figure 1, le vitrage feuilleté 1 à fabriquer est un vitrage feuilleté comportant deux substrats en verre 3 et 5, entre lesquels est disposé de manière solidaire un intercalaire 7 de composition chimique donnée, cette composition chimique spécifique étant notée $c_i$, par exemple un intercalaire à base de PVB.

Conformément à l'invention, en vue de dimensionner le vitrage feuilleté 1, on vérifie au préalable que l'adhésion de l'intercalaire 7 vis-à-vis des substrats 3 et 5 est satisfaisante. A cet effet, on évalue l'adhésion sur la base de la méthode de test et de calcul décrite dans la demande de brevet EP-A-1 495 305, qui est reprise ci-après.

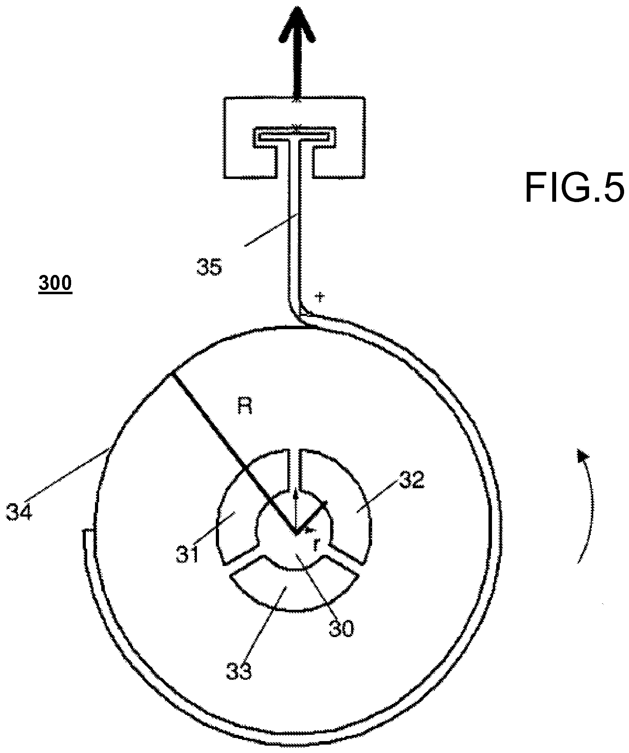

Tout d'abord, on exerce un effort de torsion sur un échantillon du vitrage feuilleté 1, jusqu'à l'amorce du décollage de l'intercalaire 7 par rapport à au moins l'un des substrats 3 et 5. En pratique, le test est réalisé sur un échantillon rond 30 du vitrage 1, de rayon r égal à 10 mm, par exemple au moyen d'un dispositif de torsion de type connu 300 illustré sur la figure 5.

Le dispositif 300 comporte trois mors 31, 32, 33, une poulie 34 de rayon R égal à 100 mm et reliée à une chaîne d'entraînement 35 d'axe vertical. Les mors sont en forme d'arcs de cercle de 120° chacun, de manière à enserrer la totalité de l'échantillon. Le revêtement superficiel des mors est dans un matériau compatible mécaniquement avec le verre, par exemple en aluminium, en Téflon®, ou en polyéthylène.

L'un des mors est maintenu fixe contre un bâti, tandis qu'un autre mors est fixé sur la poulie 34 qui est destinée à tourner pour exercer une torsion sur l'échantillon. La rotation de la poulie 34 est engendrée par le déplacement de la chaîne 35 reliée à la poulie. La chaîne est tractée à vitesse constante de 35 à 50 mm/min au minimum.

On mesure à l'aide d'un capteur de force la force F nécessaire à l'apparition d'un début de décollement de l'intercalaire 7 lors de la torsion de l'échantillon. On peut alors en déduire par calcul la contrainte de cisaillement d'adhésion, par la formule connue: $\tau = \dfrac{2FR}{\pi r^3}$ , où F est la force nécessaire à l'apparition d'un début de décollement de l'intercalaire 7, R est le rayon de la poulie 34 et r est le rayon de l'échantillon.

Comme expliqué dans la demande EP-A-1 495 305, le dispositif 300 est toutefois volumineux, ce qui impose que les tests doivent se faire en laboratoire. Le dispositif 300 n'est donc pas adapté pour des mesures de type "indicateurs procédé" sur une ligne de fabrication de vitrages feuilletés. Or, pour la fabrication de vitrage feuilletés, bien que la composition de l'intercalaire polymérique soit élaborée pour répondre aux valeurs de contraintes fixées par l'invention, une mauvaise adhésion de l'intercalaire peut néanmoins apparaître dans le produit fini en raison de paramètres liés au procédé de fabrication du vitrage, tels que les conditions de stockage de l'intercalaire, la qualité de lavage du verre, ou encore la température et les efforts de pression au cours de l'étape de calandrage lors de l'assemblage du verre et de l'intercalaire, qui influencent la qualité du collage.

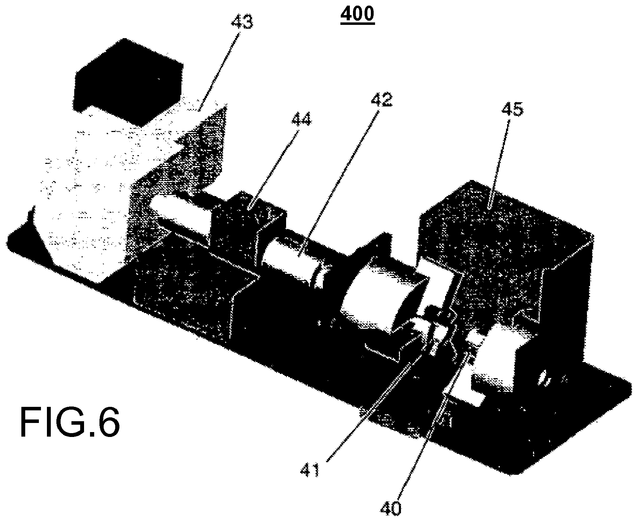

Afin de réaliser des mesures pendant le suivi de fabrication à proximité de la ligne de fabrication, et ainsi d'intervenir rapidement sur le procédé en réponse à des mauvaises valeurs de contraintes mesurées, il est possible en variante d'utiliser un autre dispositif de mesure 400 qui, avantageusement, est de faible encombrement et facilement transportable. Ce dispositif 400, représenté sur la figure 6, est miniaturisé à environ 60 cm par 20 cm et comporte deux systèmes à trois mors 40 et 41, un arbre de rotation 42, un moteur 43 pour la rotation de l'arbre, un appareil de mesure de couple 44 et un coffret 45 logeant les éléments de calcul.

L'échantillon rond du vitrage feuilleté 1 est destiné à être pris en sandwich entre les deux systèmes à mors 40 et 41, l'un des systèmes 40 étant fixe tandis que l'autre est apte à être mobile et mis en rotation grâce à sa connexion à l'arbre 42. L'appareil de mesure de couple est disposé entre le moteur et le système à mors mobile 41. La vitesse de rotation de l'arbre dépend de l'épaisseur d'intercalaire. A titre d'exemple, pour un intercalaire d'épaisseur 0,76 mm, la rotation est de l'ordre de 0,08 tour/min.

Le système 41 tourne et lorsque le moment du couple mesuré s'inverse, l'amorce du décollage de l'intercalaire 7 a eu lieu. L'appareil de mesure est relié aux éléments de calcul du coffret 45, qui comporte une partie affichage sur laquelle est directement lisible la valeur de la contrainte d'adhésion τ.

Quel que soit le dispositif utilisé, en vue d'apprécier finement les dispersions de la valeur de la contrainte d'adhésion τ, on préfère répéter le test sur plusieurs échantillons, par exemple au nombre minimal de cinq, et calculer une moyenne de la contrainte τ associée à son écart-type.

L'adhésion de l'intercalaire 7 est convenable si la valeur de la contrainte d'adhésion τ est dans une plage de valeurs admissibles pour qu'un vitrage feuilleté quelconque résiste aux efforts correspondant à la classe visée de la norme EN 12600. Selon l'invention, cette plage de valeurs admissibles est déterminée de manière expérimentale, pour chacune des classes 1 B1 et 2B2 de la norme EN 12600, à partir d'essais normalisés de résistance mécanique définis dans la norme, qui sont réalisés sur des vitrages feuilletés de compositions différentes.

La plage de valeurs admissibles, à l'intérieur de laquelle toute valeur de la contrainte d'adhésion τ convient pour satisfaire au critère d'adhésion, est l'ensemble des valeurs inférieures à 6,8MPa pour la classe 1 B1 de la norme EN 12600 et inférieures à 9,6 MPa pour la classe 2B2 de la norme EN 12600. En pratique, la plage de valeurs admissibles considérée est égale à 3,1 MPa-6,8MPa pour la classe 1B1 et 4 MPa-9,6 MPa pour la classe 2B2, la borne inférieure de ces plages de valeurs étant déterminée pour assurer une bonne transparence du vitrage, indépendamment des considérations de résistance mécanique du vitrage.

Une fois que l'on a vérifié que la contrainte d'adhésion τ de l'intercalaire 7 est située dans la plage de valeurs admissibles de la classe visée de la norme EN 12600, on procède au dimensionnement proprement dit du vitrage feuilleté 1.

Dans ce mode de réalisation, on dimensionne le vitrage 1 avec une épaisseur totale $e_{g\text{-dim}}$ de substrat en verre dans le vitrage feuilleté fixée et égale à 6 mm, ce qui correspond par exemple à une épaisseur de chaque substrat en verre 3 et 5 de 3 mm.

En vue de dimensionner l'intercalaire 7, on trace tout d'abord une courbe $C_1$ ou $C_2$, visible sur la figure 1, représentative de la résistance à la déchirure d'intercalaire minimale $J_{c\text{-min}}$ requise pour qu'un vitrage feuilleté quelconque, comportant au moins un substrat en verre et un intercalaire de même composition chimique $c_i$ que l'intercalaire 7 du vitrage feuilleté 1 à fabriquer, résiste aux efforts correspondant à la classe visée, 1 B1 ou 2B2, de la norme EN 12600, en fonction de l'épaisseur d'intercalaire $e_i$ du vitrage feuilleté quelconque, cette courbe étant établie pour une épaisseur de substrat $e_g$ égale à 6 mm. En pratique, la courbe $C_1$ ou $C_2$ est obtenue à partir d'essais normalisés de résistance mécanique définis dans la norme EN 12600, réalisés sur des vitrages feuilletés qui comportent chacun au moins un substrat en verre et un intercalaire de composition chimique $c_i$ et qui diffèrent les uns des autres par leur valeur d'épaisseur d'intercalaire, c'est-à-dire par leur composition en termes d'épaisseur de leur intercalaire.

On identifie ensuite un vitrage feuilleté de référence, qui résiste aux efforts correspondant à la classe visée, 1 B1 ou 2B2, avec une épaisseur de substrat en verre égale à 6 mm, et qui comporte un intercalaire de même composition chimique $c_i$ que l'intercalaire 7 du vitrage feuilleté 1 à dimensionner.

Un exemple d'un vitrage feuilleté de référence pour le dimensionnement du vitrage 1 conformément aux exigences de la classe 1 B1 est de type « 33.2 », c'est-à-dire comporte deux substrats en verre d'épaisseur 3 mm chacun et deux plis d'intercalaire ayant la composition spécifique $c_i$, chaque pli de l'intercalaire ayant une épaisseur standardisée de 0,38 mm, ce qui correspond à une épaisseur totale d'intercalaire $e_{i\text{-ref}}$ du vitrage feuilleté de référence égale à 0,76 mm. La résistance de ce vitrage de référence aux efforts correspondant à la classe 1 B1 est vérifiée par un essai normalisé de résistance mécanique.

On détermine alors la résistance à la déchirure $J_{c\text{-ref}}$ de l'intercalaire du vitrage « 33.2 » de référence. La résistance à la déchirure est évaluée sur la base d'une méthode de calcul de l'énergie de fond de fissure J développée par Tielking, qui est explicitée dans les demandes de brevet EP-A-1 151 855 et EP-A-1 495 305.

La résistance à la déchirure de l'intercalaire est une caractéristique intrinsèque au matériau le constituant. Elle est caractérisée par une valeur énergétique représentative de l'énergie nécessaire à la propagation d'une fissure initialisée dans le matériau. Cette énergie, appelée énergie critique $J_c$, est différente pour chaque type de matériau et est indépendante de l'épaisseur du film d'intercalaire.

La résistance à la déchirure ou énergie critique $J_c$ est donnée de manière connue par une méthode énergétique fondée sur l'intégrale de Rice J, qui définit l'énergie localisée en fond de fissure d'un film subissant des contraintes très intenses à l'endroit d'une fissuration. Elle s'écrit sous la forme mathématique simplifiée :

$$J = -\frac{1}{e_1}\left(\frac{\partial U}{\partial a}\right),$$ pour un étirement donné δ de l'échantillon testé qui sera nommé par la suite déplacement δ, et où

$e_1$ est l'épaisseur de l'échantillon

a, la taille de la fissure,

U, l'énergie potentielle de l'échantillon.

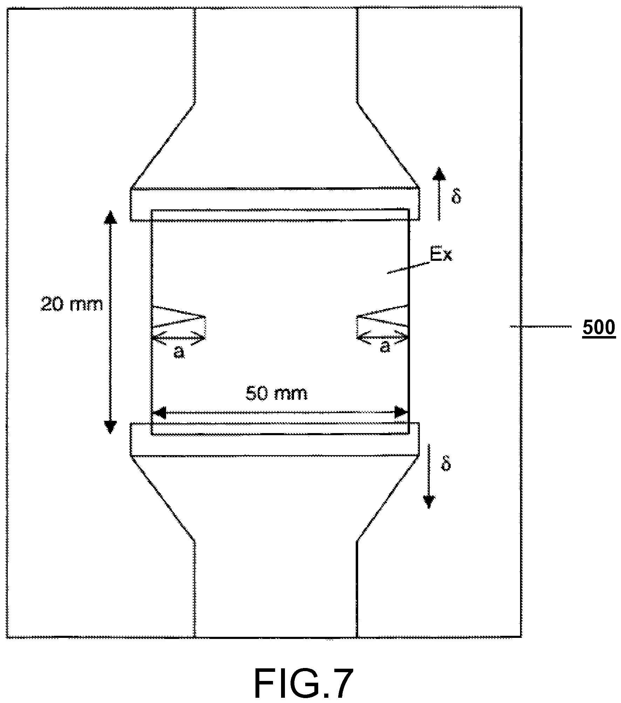

Le dispositif expérimental pour la détermination de la résistance à la déchirure est illustré sur la figure 7. Des essais de traction au moyen d'une machine de traction-compression 500 sont réalisés sur plusieurs échantillons $Ex_n$, par exemple au nombre de quatre, d'un même matériau et de surface égale à 100 mm² (50 mm de longueur par 20 mm de largeur). Chaque échantillon est entaillé sur ses côtés et perpendiculairement à la force de traction, d'une longueur de fissuration a distincte pour chaque échantillon $Ex_n$, et correspondant respectivement à 5, 8, 12 et 15 mm.

Chaque échantillon $Ex_n$ est étiré perpendiculairement aux fissurations 20 à une vitesse d'étirement de 100 mm/min et sur une longueur d'étirement ou distance $\delta$ donnée, et dans un environnement où la température est de 20°C.

Selon la méthode décrite en détail dans EP-A-1 495 305, il est possible d'établir une courbe d'évolution de l'énergie J de fond de fissure en fonction de l'étirement $\delta$ subi par l'échantillon (non représentée). A l'aide d'une caméra vidéo qui visualise la propagation de la fissure 20, on détecte ensuite pour quel déplacement $\delta_c$ la propagation de la fissure de l'échantillon commence. Puis, à partir de la courbe $J(\delta)$, on déduit la valeur de l'énergie critique $J_c$ d'initialisation de la déchirure de l'échantillon, correspondant au déplacement $\delta_c$. C'est à cette valeur critique $J_c$ que le matériau se déchire et qu'il est par conséquent mécaniquement endommagé au regard de la fonction mécanique requise.

La résistance à la déchirure ou énergie critique $J_{c-ref}$ mesurée pour l'intercalaire du vitrage « 33.2 » de référence, qui satisfait aux exigences de la classe 1 B1 de la norme EN 12600, est de 18000 J/m².

A l'aide de la courbe $C_1$, on déduit alors l'épaisseur d'intercalaire minimale requise $e_{i-min}$ correspondant à une valeur de résistance à la déchirure d'intercalaire minimale requise $J_{c-min}$ égale à la résistance à la déchirure de l'intercalaire du vitrage feuilleté de référence $J_{c-ref}$, c'est-à-dire égale à 18000 J/m². Comme montré sur la courbe $C_1$ de la figure 2, l'épaisseur d'intercalaire minimale requise $e_{i-min}$ est égale à 0,62 mm dans cet exemple.

Il en résulte qu'on peut dimensionner le vitrage feuilleté 1 avec une épaisseur $e_{i-dim}$ de l'intercalaire 7 supérieure ou égale à l'épaisseur d'intercalaire minimale requise $e_{i-min}$ = 0,62 mm. On obtient ainsi un vitrage feuilleté 1 satisfaisant aux exigences de la classes 1 B1 de la norme EN 12600, qui comporte deux substrats en verre 3 et 5 d'épaisseur 3 mm et un intercalaire 7 de composition chimique $c_i$ ayant une épaisseur inférieure à 0,76 mm disposé de manière solidaire entre les substrats.

Comme illustré sur cet exemple, le procédé de dimensionnement conforme à l'invention permet un dimensionnement optimal d'un vitrage feuilleté pour qu'il résiste à des efforts prédéterminés, c'est-à-dire avec une épaisseur totale minimale du vitrage feuilleté. En particulier, grâce à l'invention, il est possible, pour passer la même classe de performance de la même norme, de remplacer de manière systématique un vitrage connu par un vitrage aminci. Dans l'exemple précédent, il est ainsi possible, pour passer la classe 1 B1 de la norme EN 12600, de remplacer le vitrage de référence connu « 33.2 » par un vitrage aminci comportant deux substrats en verre d'épaisseur 3 mm et un intercalaire en PVB de composition chimique $C_i$ d'épaisseur $e_{i-dim}$, où 0,62 mm $\leq e_{i-dim} < 0,76$ mm.

De préférence, l'épaisseur d'intercalaire $e_{i-dim}$ d'un vitrage feuilleté dimensionné comme dans l'exemple précédent n'est supérieure à la valeur d'épaisseur d'intercalaire minimale requise $e_{i-min}$ que dans une limite de 20% au-dessus de cette valeur, c'est-à-dire, dans l'exemple précédent, $e_{i-dim}$ est de préférence telle que 0,62 mm $\leq e_{i-dim} \leq 0,74$ mm.

Un procédé de dimensionnement analogue, appliqué à la classe 2B2 de la norme EN 12600, conduit de la même façon, à l'aide de la courbe $C_2$ de la figure 2, à l'identification d'une épaisseur d'intercalaire minimale requise $e_{i-min}$ égale à 0,3 mm pour un vitrage feuilleté 1 comportant deux substrats en verre 3 et 5 d'épaisseur 3 mm et un intercalaire 7 à base de PVB ayant la composition chimique spécifique $c_i$ et disposé de manière solidaire entre les substrats. Dans ce cas, un exemple d'un vitrage feuilleté de référence est de type « 33.1 », c'est-à-dire comporte deux substrats en verre d'épaisseur 3 mm chacun et un pli d'intercalaire d'épaisseur standard ayant la composition spécifique $c_i$, ce qui correspond à une épaisseur d'intercalaire $e_{i-ref}$ du vitrage feuilleté de référence égale à 0,38 mm.

De préférence, l'épaisseur d'intercalaire $e_{i-dim}$ d'un vitrage feuilleté dimensionné pour satisfaire aux exigences de la classe 2B2 n'est supérieure à la valeur d'épaisseur d'intercalaire minimale requise $e_{i-min}$ que dans une limite de 20% au-dessus de cette valeur, c'est-à-dire, dans l'exemple précédent, $e_{i-dim}$ est de préférence telle que 0,3 mm $\leq e_{i-dim} \leq 0,36$ mm.

L'intercalaire 7 de composition chimique $c_i$ considéré dans les exemples précédents présente des performances moyennes sur le plan de sa résistance à la déchirure. En particulier, il existe d'autres compositions chimiques d'intercalaires, à base de PVB ou d'autres matériaux, pour lesquelles les performances de résistance à la déchirure sont supérieures à celles des intercalaires de composition chimique $c_i$. Les niveaux de résistance à la déchirure des compositions d'intercalaires les plus performantes connues à l'heure actuelle permettent d'envisager des épaisseurs d'intercalaire minimale requise $e_{i-min}$ encore réduites par rapport aux valeurs données précédemment à titre d'exemple.

Ainsi, pour un vitrage feuilleté adapté pour résister aux efforts correspondant à la classe 1 B1 de la norme EN 12600 et comportant deux substrats en verre d'épaisseur 3 mm, l'épaisseur d'intercalaire minimale requise $e_{i-min}$ peut descendre jusqu'à environ 0,5 mm. Dès lors, l'épaisseur d'intercalaire $e_{i-dim}$ optimisée d'un vitrage feuilleté répondant aux exigences de la classe 1 B1 de la norme EN 12600 et comportant deux substrats en verre d'épaisseur 3 mm, est de manière générale telle que 0,5 mm $\leq e_{i-dim} \leq$ 0,74 mm, la borne inférieure de cet intervalle correspondant aux compositions chimiques d'intercalaires présentant des performances élevées sur le plan de leur résistance à la déchirure.

De même, pour un vitrage feuilleté adapté pour résister aux efforts correspondant à la classe 2B2 de la norme EN 12600 et comportant deux substrats en verre d'épaisseur 3 mm, l'épaisseur d'intercalaire minimale requise $e_{i-min}$ peut descendre jusqu'à environ 0,25 mm, de sorte que l'épaisseur d'intercalaire $e_{i-dim}$ optimisée d'un vitrage feuilleté répondant aux exigences de la classe 1 B1 de la norme EN 12600 et comportant deux substrats en verre d'épaisseur 3 mm, est de manière générale telle que 0,25 mm $\leq e_{i-dim} \leq$ 0,36 mm, la borne inférieure de cet intervalle correspondant comme ci-dessus aux compositions chimiques d'intercalaires présentant des performances élevées sur le plan de leur résistance à la déchirure.

Pour la fabrication de vitrages feuilletés amincis selon l'invention comportant un intercalaire d'épaisseur $e_{i-dim}$ non standard, c'est-à-dire d'épaisseur différente de 0,38 mm, 0,76 mm, 1,14 mm, 1,52 mm, 2,28 mm, il est possible d'intégrer au procédé de fabrication classique de vitrages feuilletés une étape supplémentaire d'étirage, à partir d'une feuille de l'intercalaire considéré ayant une épaisseur standard, jusqu'à atteindre l'épaisseur $e_{i-dim}$ non standard. En variante, il est possible de fabriquer l'intercalaire directement par extrusion à l'épaisseur $e_{i-dim}$ non standard.

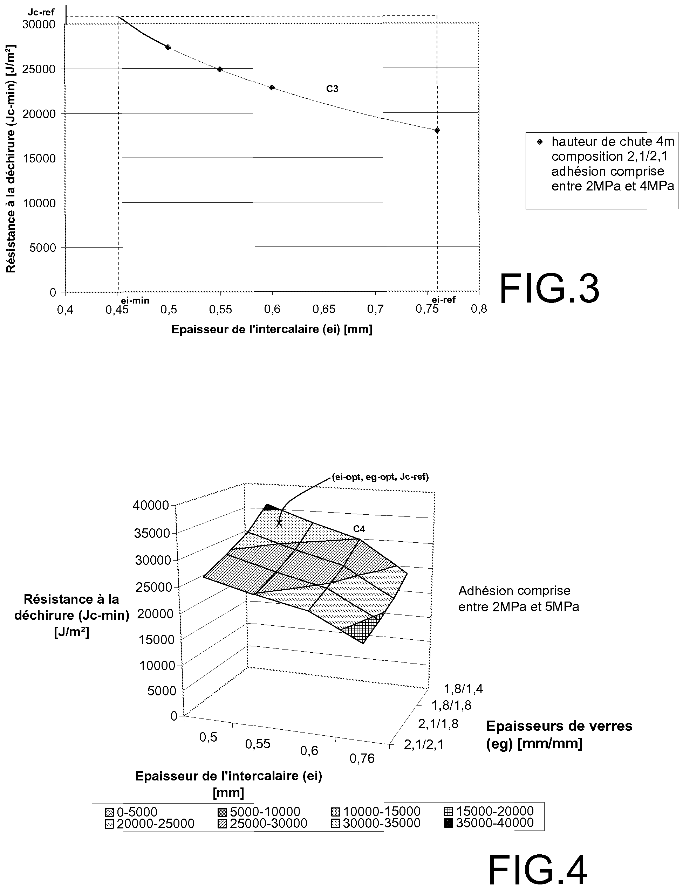

Dans les modes de réalisation illustrés par les graphiques des figures 3 et 4, on cherche à dimensionner un vitrage feuilleté, par exemple un parebrise de véhicule automobile, pour qu'il résiste à des chocs durs (norme R43). Comme précédemment, le vitrage feuilleté à fabriquer est par exemple le vitrage feuilleté 1 de la figure 1, qui comporte deux substrats en verre 3 et 5, entre lesquels est disposé de manière solidaire un intercalaire 7 de composition chimique spécifique $c_i$, par exemple un intercalaire à base de PVB.

De manière analogue au premier mode de réalisation, en vue de dimensionner le vitrage feuilleté 1 pour qu'il réponde aux exigences de la norme R43, on vérifie au préalable que l'adhésion de l'intercalaire 7 vis-à-vis des substrats 3 et 5 est satisfaisante. A cet effet, on évalue la contrainte d'adhésion $\tau$ de l'intercalaire 7 comme décrit plus haut, et on contrôle que la valeur de la contrainte d'adhésion $\tau$ est dans une plage de valeurs admissibles pour qu'un vitrage feuilleté quelconque résiste aux efforts correspondant à la norme R43. Selon l'invention, cette plage de valeurs admissibles est déterminée de manière expérimentale, à partir d'essais normalisés de résistance mécanique définis dans la norme R43, qui sont réalisés sur des vitrages feuilletés de compositions différentes.

La plage de valeurs admissibles pour la norme R43, à l'intérieur de laquelle toute valeur de la contrainte d'adhésion $\tau$ convient pour satisfaire au critère d'adhésion, est l'ensemble des valeurs inférieures à 5 MPa. De préférence, la plage de valeurs admissibles de la contrainte d'adhésion $\tau$ pour la norme R43 est égale à 2 MPa-5 MPa, la borne inférieure de cette plage de valeurs étant déterminée pour assurer une bonne transparence du vitrage, indépendamment des considérations de résistance mécanique du vitrage.

Une fois que l'on a vérifié que la contrainte d'adhésion $\tau$ de l'intercalaire 7 est située dans la plage précitée de valeurs admissibles, on procède au dimensionnement proprement dit du vitrage feuilleté 1. Les graphiques des figures 3 et 4 illustrent deux approches possibles pour le dimensionnement du vitrage 1 de sorte qu'il satisfait aux exigences de la norme R43.

Selon une première approche, qui correspond à la figure 3, on dimensionne le vitrage 1 comme dans le premier mode de réalisation, avec une épaisseur totale $e_{g-dim}$ de substrat en verre dans le vitrage feuilleté fixée et égale à 4,2 mm, ce qui correspond par exemple à une épaisseur de chaque substrat en verre 3 et 5 de 2,1 mm.

Dans ce cas, en vue de dimensionner l'intercalaire 7, on trace tout d'abord une courbe $C_3$, visible sur la figure 3, représentative de la résistance à la déchirure d'intercalaire minimale $J_{c-min}$ requise pour qu'un vitrage feuilleté quelconque, comportant au moins un substrat en verre et un intercalaire de même composition chimique $c_i$ que l'intercalaire 7 du vitrage feuilleté à fabriquer, résiste aux efforts correspondant à la norme R43, en fonction de l'épaisseur d'intercalaire $e_i$ du vitrage feuilleté quelconque, cette courbe étant établie pour une épaisseur de substrat eg égale à 4,2 mm. En pratique, la courbe $C_3$ est obtenue à partir d'essais normalisés de résistance mécanique définis dans la norme R43, réalisés sur des vitrages feuilletés qui comportent chacun au moins un substrat en verre et un intercalaire de composition chimique $c_i$ et qui diffèrent les uns des autres par leur composition en termes d'épaisseur de leur intercalaire.

On identifie ensuite un vitrage feuilleté de référence, qui résiste aux efforts correspondant à norme R43, avec une épaisseur de substrat en verre égale à 4,2 mm, et qui comporte un intercalaire ayant la composition chimique spécifique $c_i$. Un exemple d'un tel vitrage feuilleté de référence est le vitrage connu 2,1/0,76/2,1, qui comporte deux substrats en verre d'épaisseur 2,1 mm chacun et deux plis d'intercalaire d'épaisseur standard ayant la composition $c_i$, ce qui correspond à une épaisseur d'intercalaire $e_{i-ref}$ du vitrage feuilleté de référence égale à 0,76 mm. La résistance de ce vitrage de référence aux efforts correspondant à la norme R43 est vérifiée par un essai normalisé de résistance mécanique, dans cet exemple avec une hauteur de chute d'impacteur de 4 m.

On détermine alors la résistance à la déchirure

$J_{c-ref}$ de l'intercalaire du vitrage de référence 2,1/0,76/2,1, par la méthode de Tielking décrite plus haut. La valeur de la résistance à la déchirure $J_{c-ref}$ mesurée pour l'intercalaire de composition $c_i$ du vitrage de référence 2,1/0,76/2,1 est de 31000 J/m².

A l'aide de la courbe $C_3$, on déduit ensuite l'épaisseur d'intercalaire minimale requise $e_{i-min}$ correspondant à une valeur de résistance à la déchirure d'intercalaire minimale requise $J_{c-min}$ égale à la résistance à la déchirure de l'intercalaire du vitrage feuilleté de référence $J_{c-ref}$. Comme montré sur la courbe $C_3$, l'épaisseur d'intercalaire minimale requise $e_{i-min}$ est égale à 0,45 mm.

Ainsi, on peut dimensionner le vitrage feuilleté 1 avec une épaisseur $e_{idim}$ de l'intercalaire 7 supérieure ou égale à l'épaisseur d'intercalaire minimale requise $e_{i-min}$ = 0,45 mm. On obtient ainsi un vitrage feuilleté 1 satisfaisant aux exigences de la norme R43, qui comporte deux substrats 3 et 5 d'épaisseur 2,1 mm et un intercalaire 7 en PVB de composition chimique $c_i$ ayant une épaisseur inférieure à 0,76 mm disposé de manière solidaire entre les substrats.

De préférence, l'épaisseur d'intercalaire $e_{i-dim}$ du vitrage feuilleté n'est supérieure à la valeur d'épaisseur d'intercalaire minimale requise $e_{i-min}$ que dans une limite de 20% au-dessus de cette valeur, c'est-à-dire, dans l'exemple précédent, $e_{i-dim}$ est de préférence telle que 0,45 mm $\leq e_{i-dim} \leq$ 0,55 mm.

Selon une deuxième approche possible pour le dimensionnement du vitrage 1 de sorte qu'il satisfait aux exigences de la norme R43, qui correspond à la figure 4, on dimensionne le vitrage 1 sans fixer arbitrairement l'épaisseur de substrat en verre du vitrage feuilleté.

Dans ce cas, on trace un graphique $C_4$ en trois dimensions, visible sur la figure 4, représentatif de la résistance à la déchirure d'intercalaire minimale $J_{c-min}$ requise pour qu'un vitrage feuilleté quelconque, comportant au moins un substrat en verre et un intercalaire de même composition chimique $c_i$ que l'intercalaire 7 du vitrage feuilleté à fabriquer, résiste aux efforts correspondant à la norme R43, en fonction à la fois de l'épaisseur d'intercalaire $e_i$ du vitrage feuilleté quelconque et de l'épaisseur de substrat eg du vitrage feuilleté quelconque. Le graphique $C_4$ de la figure 4 est obtenu à partir d'essais normalisés de résistance mécanique définis dans la norme R43, réalisés sur des vitrages feuilletés qui comportent chacun au moins un substrat en verre et un intercalaire de composition chimique $c_i$ et qui diffèrent les uns des autres par leur composition en termes d'épaisseur d'intercalaire et d'épaisseur de substrat.

On détermine ensuite la résistance à la déchirure $J_{c-ref}$ d'un vitrage feuilleté de référence, qui résiste aux efforts correspondant à norme R43 et qui comporte un intercalaire ayant la composition chimique spécifique $c_i$.

Le vitrage feuilleté connu 2,1/0,76/2,1 décrit ci-dessus peut par exemple servir de vitrage feuilleté de référence, de même que le vitrage feuilleté 2,1/0,76/1,8, également connu, qui comporte deux substrats en verre d'épaisseurs respectives 2,1 mm et 1,8 mm et deux plis d'intercalaire d'épaisseur standard ayant la composition chimique $c_i$, ce qui correspond à une épaisseur d'intercalaire $e_{i-ref}$ égale à 0,76 mm. La résistance à la déchirure $J_{c-ref}$ de l'un ou l'autre vitrage de référence aux efforts correspondant à la norme R43 est évaluée comme précédemment par la méthode de Tielking.

A l'aide du graphique $C_4$, on déduit ensuite une combinaison de valeurs optimales $e_{i-opt}$, $e_{g-opt}$ de l'épaisseur d'intercalaire et de l'épaisseur de substrat qui correspond à une valeur de résistance à la déchirure d'intercalaire minimale requise $J_{c-min}$ égale à la résistance à la déchirure de l'intercalaire du vitrage feuilleté de référence $J_{c-ref}$. On entend par combinaison de valeurs optimales de l'épaisseur d'intercalaire et de l'épaisseur de substrat, une combinaison pour laquelle l'épaisseur totale du vitrage feuilleté est minimisée. Par exemple, si l'on part du vitrage de référence 2,1/0,76/2,1, qui correspond à une valeur de la résistance à la déchirure $J_{c-ref}$ de 31000 J/m², les points qui fournissent une combinaison de valeurs optimales $e_{i-opt}$, $e_{g-opt}$ sont les points de la surface, ou nappe, du graphique $C_4$ qui correspondent à une valeur de $J_{c-min}$ de 31000 J/m². A ce sujet, on note que chacune des valeurs optimales $e_{i-opt}$ ou $e_{g-opt}$ n'est pas forcément, de manière individuelle, une valeur minimale de l'épaisseur d'intercalaire ou une valeur minimale de l'épaisseur de substrat. C'est la combinaison des valeurs $e_{i-opt}$ et $e_{g-opt}$ qui conduit à une valeur minimisée de l'épaisseur globale du vitrage feuilleté.

Comme visible sur le graphique $C_4$, la combinaison de valeurs $e_i$ = 0,5 mm et $e_g$ = 1,8 mm/1,4 mm est une combinaison de valeurs supérieures ou égales à une combinaison de valeurs optimales. Dès lors, on peut dimensionner le vitrage feuilleté 1 avec une épaisseur $e_{i-dim}$ de l'intercalaire 7 supérieure ou égale à 0,5 mm et des épaisseurs $e_{g-dim}$ des substrats 3 et 5 de 1,8 mm et 1,4 mm, respectivement, ce vitrage feuilleté 1 satisfaisant aux exigences de la norme R43.

Comme expliqué dans le premier mode de réalisation, l'intercalaire de composition chimique $c_i$ considéré dans les exemples ci-dessus présente des performances moyennes sur le plan de sa résistance à la déchirure et les niveaux de résistance à la déchirure des compositions chimiques d'intercalaires les plus performantes connues à l'heure actuelle permettent d'envisager des combinaisons de valeurs optimales $e_{i-opt}$, $e_{g-opt}$ encore réduites par rapport aux valeurs données précédemment.

En particulier, pour un vitrage feuilleté adapté pour résister aux efforts correspondant à la norme R43 et comportant deux substrats en verre d'épaisseurs respectives 1,8 mm et 1,4 mm, l'épaisseur d'intercalaire minimale requise $e_{i-min}$ peut descendre jusqu'à environ 0,4 mm. Dès lors, l'épaisseur d'intercalaire $e_{i-dim}$ optimisée d'un vitrage feuilleté répondant aux exigences de la norme R43 et comportant deux substrats en verre d'épaisseurs respectives 1,8 mm et 1,4 mm est, de manière générale, telle que $0{,}4 \text{ mm} \leq e_{i\text{-dim}} \leq 0{,}74 \text{ mm}$, la borne inférieure de cet intervalle correspondant aux compositions chimiques d'intercalaires présentant des performances élevées sur le plan de leur résistance à la déchirure.

Si l'on désire que l'intercalaire 7 du vitrage feuilleté 1 présente à la fois des propriétés d'isolation acoustique et de résistance mécanique, il convient de sélectionner l'intercalaire 7 pour ses performances acoustiques, préalablement à l'évaluation de la contrainte d'adhésion $\tau$ et au dimensionnement proprement dit à l'aide du graphique de la résistance à la déchirure minimale $J_{c\text{-min}}$ en fonction de l'épaisseur d'intercalaire $e_i$ et/ou de l'épaisseur de substrat $e_g$.

A cet effet, on utilise la technique de sélection décrite dans la demande de brevet EP-A-0 844 075. Selon cette technique de sélection, on évalue à l'aide d'un viscoanalyseur la composante élastique (ou module de cisaillement) G' et la tangente de l'angle de perte (ou facteur de perte) $\tan\delta$ du matériau de l'intercalaire.

Le viscoanalyseur permet de soumettre un échantillon du matériau à des sollicitations de déformations dans des conditions précises de température et de fréquence, et ainsi d'obtenir et de traiter l'ensemble des grandeurs rhéologiques caractérisant le matériau. L'exploitation des données brutes des mesures de force, déplacement et déphasage, en fonction de la fréquence, à chaque température, permet de calculer les grandeurs du module de cisaillement G' et de la tangente de l'angle de perte $\tan\delta$.

Il a été montré qu'un bon intercalaire acoustique doit posséder un facteur de perte $\tan\delta$ supérieur à 0,6 et un module de cisaillement G' inférieur à $2.10^7 \text{ N/m}^2$, pour une température de 20°C et une fréquence de 50 Hz.

Une fois le matériau de l'intercalaire sélectionné pour ses propriétés acoustique, on évalue son adhésion puis on dimensionne le vitrage feuilleté conformément au procédé de l'invention.

Comme il ressort des modes de réalisation décrits précédemment, le procédé conforme à l'invention permet de déterminer des épaisseurs optimales de substrat et/ou d'intercalaire pour un vitrage feuilleté en garantissant que le vitrage obtenu résiste à des efforts prédéterminés. En particulier, grâce à l'invention, il est possible, pour une classe de performance d'une norme, de rechercher de manière systématique une version amincie d'un vitrage connu satisfaisant aux exigences de cette classe de performance. Il est ainsi possible d'éviter des surdimensionnements importants de vitrages feuilletés, ce qui n'est pas possible avec les méthodes de dimensionnement de vitrages feuilletés connues.

Cela provient, d'une part, de ce que le procédé selon l'invention prend en compte et permet une variation de l'ensemble des paramètres qui influent sur la résistance mécanique du vitrage feuilleté, qui sont l'adhésion de l'intercalaire vis-à-vis du substrat, la résistance à la déchirure d'intercalaire, l'épaisseur d'intercalaire, l'épaisseur de substrat. D'autre part, le procédé selon l'invention permet une détermination directe des épaisseurs optimisées d'intercalaire et de substrat, et non par tâtonnements comme c'était le cas avec les méthodes connues de dimensionnement, grâce au graphique donnant la résistance à la déchirure minimale requise en fonction des épaisseurs.

Il en résulte la possibilité, pour chaque application de vitrage feuilleté, de réduire les épaisseurs d'intercalaire et/ou de substrat des vitrages feuilletés par rapport aux vitrages feuilletés utilisés actuellement, avec une réduction induite du coût de revient et du poids des vitrages feuilletés, tout en garantissant les performances de ces vitrages en termes de résistance mécanique. En particulier, il est possible de réduire l'épaisseur d'intercalaire, l'épaisseur de substrat ou les deux à la fois, et ainsi de réduire l'épaisseur totale du vitrage feuilleté.

Il est bien entendu qu'un vitrage feuilleté selon l'invention, dimensionné pour atteindre une certaine résistance mécanique, peut comprendre un ou plusieurs substrats à fonction verrière, de même qu'un intercalaire monolithique ou bien une pluralité d'intercalaires séparés par divers substrats. Dans tous les cas, la somme des épaisseurs des substrats correspond à l'épaisseur de substrat $e_{g\text{-dim}}$ et la somme des épaisseurs des intercalaires correspond à l'épaisseur d'intercalaire $e_{i\text{-dim}}$, où $e_{g\text{-dim}}$ et $e_{i\text{-dim}}$ sont déterminées grâce au graphique donnant la résistance à la déchirure minimale requise en fonction des épaisseurs.

L'invention n'est pas limitée aux exemples décrits et représentés. En particulier, l'invention a été illustrée à partir d'exemples de vitrages feuilletés mettant en oeuvre au moins un substrat en verre et au moins un intercalaire en PVB de composition chimique $c_i$. L'invention peut toutefois être appliquée pour tout type de vitrage feuilleté, ayant une composition chimique donnée de son ou chacun de ses substrats à fonction verrière et une composition chimique donnée de son ou chacun de ses intercalaires polymériques. Elle peut en particulier être appliquée pour un vitrage feuilleté comportant au moins un substrat à fonction verrière en plastique. Elle peut également être appliquée pour un vitrage feuilleté comportant au moins un intercalaire en PVB ayant une composition chimique différente de la composition $c_i$, ou encore pour un vitrage feuilleté comportant au moins un intercalaire constitué à base d'un matériau polymérique à propriétés viscoélastiques autre que le PVB tel que, à titre d'exemples non limitatifs, l'éthylène vinylacétate (EVA) ou le polyuréthane (PU).

De plus, le procédé conforme à l'invention a été illustré ci-dessus pour des cas dans lesquels soit l'épaisseur de substrat est fixée à une valeur de référence connue et l'épaisseur d'intercalaire est optimisée, soit les deux épaisseurs de substrat et d'intercalaire sont optimisées simultanément. Le procédé de dimensionnement selon l'invention peut toutefois être également mis en oeuvre en fixant l'épaisseur d'intercalaire à une valeur de référence connue et en optimisant uniquement l'épaisseur de substrat, à l'aide d'un graphique représentatif de la résistance à la déchirure d'intercalaire minimale $J_{c-min}$ en fonction de l'épaisseur de substrat $e_g$, ce graphique étant établi pour une épaisseur d'intercalaire du vitrage feuilleté égale à la valeur de référence connue.

**Revendications**

1. Procédé de fabrication d'un vitrage feuilleté (1) pour qu'il résiste à des efforts prédéterminés, le vitrage feuilleté comportant au moins un substrat à fonction verrière (3, 5) de composition chimique donnée et au moins un intercalaire polymérique (7) de composition chimique ($c_i$) donnée, **caractérisé en ce qu'**il comprend des étapes dans lesquelles :

   - on identifie un vitrage feuilleté de référence, qui résiste auxdits efforts prédéterminés et qui comporte au moins un substrat et un intercalaire de mêmes compositions chimiques que ceux du vitrage feuilleté à fabriquer ;
   - on détermine la résistance à la déchirure ($J_{c-ref}$) de l'intercalaire du vitrage feuilleté de référence, l'épaisseur d'intercalaire ($e_{i-ref}$) du vitrage feuilleté de référence et l'épaisseur de substrat ($e_{g-ref}$) du vitrage feuilleté de référence ;
   - à l'aide d'un graphique ($C_1$, $C_2$, $C_3$, $C_4$) représentatif de la résistance à la déchirure d'intercalaire minimale ($J_{c-min}$) requise pour qu'un vitrage feuilleté quelconque, comportant au moins un substrat et un intercalaire de mêmes compositions chimiques que ceux du vitrage feuilleté à fabriquer, résiste auxdits efforts prédéterminés, en fonction de l'épaisseur d'intercalaire ($e_i$) du vitrage feuilleté quelconque et/ou de l'épaisseur de substrat ($e_g$) du vitrage feuilleté quelconque, on déduit une combinaison de valeurs optimales ($e_{i-opt}$, $e_{g-opt}$) de l'épaisseur d'intercalaire et de l'épaisseur de substrat qui correspond à une valeur de résistance à la déchirure d'intercalaire minimale requise égale à la résistance à la déchirure de l'intercalaire du vitrage feuilleté de référence ($J_{c-min} = J_{c-ref}$) ;
   - on dimensionne le vitrage feuilleté (1) avec une épaisseur choisie d'intercalaire ($e_{i-dim}$) supérieure ou égale à ladite valeur optimale d'épaisseur d'intercalaire ($e_{i-opt}$) et une épaisseur choisie de substrat ($e_{g-dim}$) supérieure ou égale à ladite valeur optimale d'épaisseur de substrat ($e_{g-opt}$).

2. Procédé selon la revendication 1, **caractérisé en ce qu'**on dimensionne le vitrage feuilleté (1) avec une épaisseur choisie de substrat égale à l'épaisseur de substrat du vitrage feuilleté de référence ($e_{g-dim} = e_{g-ref}$) et **en ce que** le procédé comprend des étapes dans lesquelles :

   - à l'aide d'un graphique ($C_1$, $C_2$, $C_3$) représentatif de la résistance à la déchirure d'intercalaire minimale ($J_{c-min}$) requise pour qu'un vitrage feuilleté quelconque, comportant au moins un substrat et un intercalaire de mêmes compositions chimiques que ceux du vitrage feuilleté à fabriquer, résiste auxdits efforts prédéterminés, en fonction de l'épaisseur d'intercalaire ($e_i$) du vitrage feuilleté quelconque, ce graphique étant établi pour une épaisseur de substrat du vitrage feuilleté quelconque égale à l'épaisseur de substrat dans le vitrage feuilleté de référence ($e_g = e_{g-ref}$), on déduit l'épaisseur d'intercalaire minimale requise ($e_{i-min}$) qui correspond à une valeur de résistance à la déchirure d'intercalaire minimale requise égale à la résistance à la déchirure de l'intercalaire du vitrage feuilleté de référence ($J_{c-min} = J_{c-ref}$) ;
   - on dimensionne le vitrage feuilleté (1) avec une épaisseur choisie d'intercalaire ($e_{i-dim}$) supérieure ou égale à ladite épaisseur d'intercalaire minimale requise ($e_{i-min}$) et une épaisseur choisie de substrat ($e_{g-dim}$) égale à l'épaisseur de substrat du vitrage feuilleté de référence ($e_{g-ref}$).

3. Procédé selon la revendication 1, **caractérisé en ce qu'**on dimensionne le vitrage feuilleté (1) avec une épaisseur choisie d'intercalaire égale à l'épaisseur d'intercalaire du vitrage feuilleté de référence ($e_{i-dim} = e_{i-ref}$) et **en ce que** le procédé comprend des étapes dans lesquelles :

   - à l'aide d'un graphique représentatif de la résistance à la déchirure d'intercalaire minimale ($J_{c-min}$) requise pour qu'un vitrage feuilleté quelconque, comportant au moins un substrat et un intercalaire de mêmes compositions chimiques que ceux du vitrage feuilleté à fabriquer, résiste auxdits efforts prédéterminés, en fonction de l'épaisseur de substrat ($e_g$) du vitrage feuilleté quelconque, ce graphique étant établi pour une épaisseur d'intercalaire du vitrage feuilleté quelconque égale à l'épaisseur d'intercalaire du vitrage feuilleté de référence ($e_i = e_{i-ref}$), on déduit l'épaisseur de substrat minimale requise ($e_{g-min}$) qui correspond à une valeur de résistance à la déchirure d'intercalaire minimale requise égale à la résistance à la déchirure de l'intercalaire du vitrage feuilleté de référence ($J_{c-min} = J_{c-ref}$) ;
   - on dimensionne le vitrage feuilleté (1) avec une épaisseur choisie d'intercalaire ($e_{i-dim}$) égale à l'épaisseur d'intercalaire du vitrage feuilleté de référence ($e_{i-ref}$) et une épaisseur choisie de substrat ($e_{g-dim}$) supérieure ou égale à l'épaisseur de substrat minimale requise ($e_{g-min}$).

4. Procédé selon l'une quelconque des revendications précédentes, **caractérisé en ce que** l'une au moins des épaisseurs choisies est strictement inférieure à l'épaisseur correspondante du vitrage feuilleté de référence ($e_{i\text{-dim}}$ $e_{i\text{-ref}}$ et/ou $e_{g\text{-dim}} < e_{g\text{-ref}}$).

**5.** Procédé selon l'une quelconque des revendications précédentes, **caractérisé en ce que**, préalablement au dimensionnement du vitrage feuilleté (1) pour qu'il résiste auxdits efforts prédéterminés, on trace le graphique ($C_1$, $C_2$, $C_3$, $C_4$) représentatif de la résistance à la déchirure d'intercalaire minimale ($J_{c\text{-min}}$) requise pour qu'un vitrage feuilleté quelconque, comportant au moins un substrat et un intercalaire de mêmes compositions chimiques que ceux du vitrage feuilleté à fabriquer, résiste auxdits efforts prédéterminés, en fonction de l'épaisseur d'intercalaire ($e_i$) du vitrage feuilleté quelconque et/ou de l'épaisseur de substrat ($e_g$) du vitrage feuilleté quelconque, à partir d'essais de résistance mécanique réalisés sur des vitrages feuilletés de compositions différentes en termes d'épaisseur d'intercalaire et/ou d'épaisseur de substrat.

**6.** Procédé selon l'une quelconque des revendications précédentes, **caractérisé en ce que**, préalablement au dimensionnement du vitrage feuilleté (1) pour qu'il résiste auxdits efforts prédéterminés, on vérifie que l'adhésion de l'intercalaire du vitrage feuilleté à fabriquer vis-à-vis du substrat de ce vitrage feuilleté est satisfaisante.

**7.** Procédé selon la revendication 6, **caractérisé en ce qu'**on vérifie que l'adhésion de l'intercalaire du vitrage feuilleté à fabriquer vis-à-vis du substrat de ce vitrage feuilleté est satisfaisante en réalisant une torsion d'un échantillon de l'intercalaire solidaire du substrat, en mesurant la force de torsion (F) pour laquelle la dissociation de l'intercalaire avec le substrat est amorcée, en calculant à partir de cette force (F) la contrainte de cisaillement d'adhésion ($\tau$) correspondante, et en comparant cette valeur de la contrainte d'adhésion ($\tau$) à une plage de valeurs admissibles pour qu'un vitrage feuilleté quelconque résiste auxdits efforts prédéterminés.

**8.** Procédé selon l'une quelconque des revendications précédentes, **caractérisé en ce qu'**on identifie le vitrage feuilleté de référence qui résiste auxdits efforts prédéterminés en réalisant un essai de résistance mécanique sur le vitrage feuilleté de référence.

**9.** Procédé selon l'une quelconque des revendications précédentes, **caractérisé en ce qu'**on détermine la résistance à la déchirure ($J_{c\text{-ref}}$) de l'intercalaire du vitrage feuilleté de référence par la méthode de Tielking.

**10.** Procédé selon l'une quelconque des revendications précédentes, **caractérisé en ce que**, préalablement au dimensionnement du vitrage feuilleté (1) pour qu'il résiste auxdits efforts prédéterminés, on vérifie que les propriétés d'isolation acoustique de l'intercalaire du vitrage feuilleté à fabriquer sont satisfaisantes.

**11.** Procédé selon la revendication 10, **caractérisé en ce que** les propriétés d'isolation acoustique de l'intercalaire du vitrage feuilleté à fabriquer sont satisfaisantes lorsque l'intercalaire possède un facteur de perte $\tan\delta$ supérieur à 0,6 et un module de cisaillement G' inférieur à $2.10^7$ N/m$^2$, pour une température de 20°C et une fréquence de 50 Hz.

**12.** Vitrage feuilleté obtenu par le procédé de l'une quelconque des revendications 1 à 11, qui est adapté pour résister aux efforts correspondant à la classe 1 B1 de la norme EN 12600 et qui comporte deux substrats en verre d'épaisseur 3 mm et un intercalaire en PVB d'épaisseur $e_i$ telle que 0,5 mm $\leq e_i \leq$ 0,74 mm disposé de manière solidaire entre les substrats en verre.

**13.** Vitrage feuilleté obtenu par le procédé de l'une quelconque des revendications 1 à 11, qui est adapté pour résister aux efforts correspondant à la classe 2B2 de la norme EN 12600 et qui comporte deux substrats en verre d'épaisseur 3 mm et un intercalaire en PVB d'épaisseur $e_i$ telle que 0,25 mm $\leq e_i \leq$ 0,36 mm disposé de manière solidaire entre les substrats en verre.

**14.** Vitrage feuilleté obtenu par le procédé de l'une quelconque des revendications 1 à 11, qui est adapté pour résister aux efforts correspondant à la norme R43 et qui comporte deux substrats en verre d'épaisseurs respectives $e_{g1}$ = 1,8 mm et $e_{g2}$ = 1,4 mm et un intercalaire en PVB d'épaisseur $e_i$ telle que 0,4 mm $\leq e_i \leq$ 0,74 mm disposé de manière solidaire entre les substrats en verre.

**15.** Vitrage feuilleté selon l'une quelconque des revendications 12 à 14, dans lequel l'intercalaire possède un facteur de perte $\tan\delta$ supérieur à 0,6 et un module de cisaillement G' inférieur à $2.10^7$ N/m$^2$, pour une température de 20°C et une fréquence de 50 Hz.

**Patentansprüche**

**1.** Verfahren zur Herstellung einer Verbundverglasung (1), die vorgegebenen Beanspruchungen standhält, wobei die Verbundverglasung mindestens ein Substrat mit Glasfunktion (3, 5) mit einer bestimmten chemischen Zusammensetzung und mindestens eine polymere Zwischenschicht (7) mit einer bestimmten chemischen Zusammensetzung ($c_i$) umfasst, **dadurch gekennzeichnet, dass** es folgende Schritte umfasst:

- Ermitteln einer Referenz-Verbundverglasung, die den vorgegebenen Beanspruchungen standhält und die mindestens ein Substrat und eine Zwischenschicht derselben chemischen Zusammensetzungen wie die der herzustellenden Verbundverglasung umfasst,

- Bestimmen der Reißfestigkeit ($J_{c-ref}$) der Zwischenschicht der Referenz-Verbundverglasung, der Stärke der Zwischenschicht ($e_{i-ref}$) der Referenz-Verbundverglasung und der Substratstärke ($e_{g-ref}$) der Referenz-Verbundverglasung,

- mit Hilfe eines Graphen ($C_1$, $C_2$, $C_3$, $C_4$), der für die Mindest-Reißfestigkeit der Zwischenschicht ($J_{c-min}$) repräsentativ ist, die erforderlich ist, damit eine beliebige Verbundverglasung, die mindestens ein Substrat und eine Zwischenschicht derselben chemischen Zusammensetzungen wie jene der herzustellenden Verbundverglasung umfasst, den vorgegebenen Beanspruchungen standhält, in Abhängigkeit von der Zwischenschichtstärke ($e_i$) der beliebigen Verbundverglasung und/oder der Substratstärke ($e_g$) der beliebigen Verbundverglasung, Ableiten einer Kombination optimaler Werte ($e_{i-opt}$, $e_{g-opt}$) der Zwischenschichtstärke und der Substratstärke, die einem erforderlichen Mindest-Reißfestigkeitswert der Zwischenschicht der Referenz-Verbundverglasung ($J_{c-min} = J_{c-ref}$) entspricht,

- Dimensionieren der Verbundverglasung (1) mit einer ausgewählten Zwischenschichtstärke ($e_{i-dim}$) von über oder gleich dem optimalen Wert der Zwischenschichtstärke ($e_{i-opt}$) und einer ausgewählten Substratstärke ($e_{g-dim}$) von über oder gleich dem optimalen Wert der Substratstärke ($e_{g-opt}$).

2. Verfahren nach Anspruch 1, **dadurch gekennzeichnet, dass** die Verbundverglasung (1) mit einer ausgewählten Substratstärke, die gleich der Substratstärke der Referenz-Verbundverglasung ist ($e_{g-dim} = e_{g-ref}$), dimensioniert wird, und dadurch, dass das Verfahren die folgenden Schritte umfasst:

- mit Hilfe eines Graphen ($C_1$, $C_2$, $C_3$), der für die Mindest-Reißfestigkeit der Zwischenschicht ($J_{c-min}$) repräsentativ ist, die erforderlich ist, damit eine beliebige Verbundverglasung, die mindestens ein Substrat und eine Zwischenschicht mit denselben chemischen Zusammensetzungen wie jene der herzustellenden Verbundverglasung umfasst, den vorgegebenen Beanspruchungen standhält, in Abhängigkeit von der Zwischenschichtstärke ($e_i$) der beliebigen Verbundverglasung, wobei dieser Graph für eine Substratstärke der beliebigen Verbundverglasung, die gleich der Substratstärke in der Referenz-Verbundverglasung ($e_g = e_{g-ref}$) ist, erstellt wird, Ableiten der erforderlichen Mindeststärke der Zwischenschicht ($e_{i-min}$), die einem erforderlichen Mindest-Reißfestigkeitswert der Zwischenschicht entspricht, der gleich der Reißfestigkeit der Zwischenschicht der Referenz-Verbundverglasung ($J_{c-min} = J_{c-ref}$) ist,

- Dimensionieren der Verbundverglasung (1) mit einer ausgewählten Zwischenschichtstärke ($e_{i-dim}$) von über oder gleich der erforderlichen Mindeststärke der Zwischenschicht ($e_{i-min}$) und einer ausgewählten Substratstärke ($e_{g-dim}$), die gleich der Substratstärke der Referenz-Verbundverglasung ($e_{g-ref}$) ist.

3. Verfahren nach Anspruch 1, **dadurch gekennzeichnet, dass** die Verbundverglasung (1) mit einer ausgewählten Zwischenschichtstärke, die gleich der Zwischenschichtstärke der Referenz-Verbundverglasung ist ($e_{i-dim} = e_{i-ref}$), dimensioniert wird, und dadurch, dass das Verfahren die folgenden Schritte umfasst:

- mit Hilfe eines Graphen, der für die Mindest-Reißfestigkeit der Zwischenschicht ($J_{c-min}$) repräsentativ ist, die erforderlich ist, damit eine beliebige Verbundverglasung, die mindestens ein Substrat und eine Zwischenschicht mit denselben chemischen Zusammensetzungen wie jene der herzustellenden Verbundverglasung umfasst, den vorgegebenen Beanspruchungen standhält, in Abhängigkeit von der Zwischenschichtstärke ($e_g$) der beliebigen Verbundverglasung, wobei dieser Graph für eine Zwischenschichtstärke der beliebigen Verbundverglasung, die gleich der Zwischenschichtstärke in der Referenz-Verbundverglasung ($e_i = e_{i-ref}$) ist, erstellt wird, Ableiten der erforderlichen Mindeststärke des Substrats ($e_{g-min}$), die einem erforderlichen Mindest-Reißfestigkeitswert der Zwischenschicht entspricht, der gleich der Reißfestigkeit der Zwischenschicht der Referenz-Verbundverglasung ($J_{c-min} = J_{c-ref}$) ist,

- Dimensionieren der Verbundverglasung (1) mit einer ausgewählten Zwischenschichtstärke ($e_{i-dim}$), die gleich der Referenz-Zwischenschichtstärke ($e_{i-ref}$) ist, und einer ausgewählten Substratstärke ($e_{g-dim}$) von über oder gleich der erforderlichen Mindeststärke des Substrats ($e_{g-mim}$).

4. Verfahren nach einem der vorhergehenden Ansprüche, **dadurch gekennzeichnet, dass** mindestens eine der ausgewählten Stärken kleiner als die entsprechende Stärke der Referenz-Verbundverglasung ist ($e_{i-dim} < e_{i-ref}$ und/oder $e_{g-dim} < e_{g-ref}$).

5. Verfahren nach einem der vorhergehenden Ansprüche, **dadurch gekennzeichnet, dass** vor der Dimensionierung der Verbundverglasung (1), die den vorgegebenen Beanspruchungen standhält, der Graph ($C_1$, $C_2$, $C_3$, $C_4$) erstellt wird, der für die Mindest-Reißfestigkeit der Zwischenschicht ($J_{c-min}$) repräsentativ ist, die erforderlich ist, damit eine beliebige Verbundverglasung, die mindestens ein Substrat und eine Zwischenschicht mit denselben chemischen Zusammensetzungen wie jene der herzustellenden Verbundverglasung umfasst, in Abhängigkeit von der Zwischenschichtstärke ($e_i$) der beliebigen Verbundverglasung und/oder der Substratstärke ($e_g$) der beliebigen Verbundverglasung, auf Grundlage von mechanischen Festigkeitstests, die an Verbundverglasungen unterschiedlicher Zusammensetzungen im Hinblick auf die Zwischenschichtstärke und/oder Substratstärke durchgeführt werden, den vorgegebenen Beanspruchungen standhält.

6. Verfahren nach einem der vorhergehenden Ansprüche, **dadurch gekennzeichnet, dass** vor der Dimensionierung der Verbundverglasung (1), die den vorgegebenen Beanspruchungen standhält, überprüft wird, dass die Haftung der Zwischenschicht der herzustellenden Verbundverglasung an dem Substrat dieser Verbundverglasung zufriedenstellend ist.

7. Verfahren nach Anspruch 6, **dadurch gekennzeichnet, dass** überprüft wird, dass die Haftung der Zwischenschicht der herzustellenden Verbundverglasung an dem Substrat dieser Verbundverglasung zufriedenstellend ist, indem ein Probenkörper der mit dem Substrat fest verbundenen Zwischenschicht einer Torsion unterzogen wird, indem die Torsionskraft (F) gemessen wird, bei der die Ablösung der Zwischenschicht von dem Substrat beginnt, indem ausgehend von dieser Kraft (F) die entsprechende Adhäsionsscherspannung ($\tau$) berechnet wird und indem dieser Wert der Adhäsionsscherspannung ($\tau$) mit einem Wertebereich von zulässigen Werten verglichen wird, damit eine beliebige Verbundverglasung den vorgegebenen Beanspruchungen standhält.

8. Verfahren nach einem der vorhergehenden Ansprüche, **dadurch gekennzeichnet, dass** die Referenz-Verbundverglasung, die den vorgegebenen Beanspruchungen standhält, ermittelt wird, indem ein mechanischer Festigkeitstest an der Referenz-Verbundverglasung durchgeführt wird.

9. Verfahren nach einem der vorhergehenden Ansprüche, **dadurch gekennzeichnet, dass** die Reißfestigkeit ($J_{c-ref}$) der Zwischenschicht der Referenz-Verbundverglasung anhand des Verfahrens nach Tielking bestimmt wird.

10. Verfahren nach einem der vorhergehenden Ansprüche, **dadurch gekennzeichnet, dass** vor der Dimensionierung der Verbundverglasung (1), die den vorgegebenen Beanspruchungen standhält, überprüft wird, dass die schalldämmenden Eigenschaften der herzustellenden Verbundverglasung zufriedenstellend sind.

11. Verfahren nach Anspruch 10, **dadurch gekennzeichnet, dass** die schalldämmenden Eigenschaften der Zwischenschicht der herzustellenden Verbundverglasung zufriedenstellend sind, wenn die Zwischenschicht einen Verlustfaktor $\tan\delta$ von über 0,6 und ein Schermodul G' von unter $2.10^7$ $N/m^2$ bei einer Temperatur von 20 °C und einer Frequenz von 50 Hz besitzt.

12. Verbundverglasung, erhalten gemäß dem Verfahren nach einem der Ansprüche 1 bis 11, die geeignet ist, um den der Klasse 1B1 der Norm EN 12600 entsprechenden Beanspruchungen standzuhalten und die zwei Glassubstrate der Stärke 3 mm und eine PVB-Zwischenschicht der Stärke $e_i$ wie etwa 0,5 mm $\leq e_i \leq$ 0,74 mm umfasst, die fest verbunden zwischen den Glassubstraten angeordnet ist.

13. Verbundverglasung, erhalten gemäß dem Verfahren nach einem der Ansprüche 1 bis 11, die geeignet ist, um den der Klasse 2B2 der Norm EN 12600 entsprechenden Beanspruchungen standzuhalten und die zwei Glassubstrate der Stärke 3 mm und eine PVB-Zwischenschicht der Stärke $e_i$ wie etwa 0,25 mm $\leq e_i \leq$ 0,36 mm umfasst, die fest verbunden zwischen den Glassubstraten angeordnet ist.

14. Verbundverglasung, erhalten gemäß dem Verfahren nach einem der Ansprüche 1 bis 11, die geeignet ist, um den der Norm R43 entsprechenden Beanspruchungen standzuhalten und die zwei Glassubstrate der jeweiligen Stärken $e_{g1}$ = 1,8 mm und $e_{g2}$ = 1,4 mm und eine PVB-Zwischenschicht der Stärke $e_i$ wie etwa 0,4 mm $\leq e_i \leq$ 0,74 mm umfasst, die fest verbunden zwischen den Glassubstraten angeordnet ist.

15. Verbundverglasung nach einem der Ansprüche 12 bis 14, wobei die Zwischenschicht einen Verlustfaktor $\tan\delta$ von über 0,6 und ein Schermodul G' von unter $2.10^7$ $N/m^2$ bei einer Temperatur von 20 °C und einer Frequenz von 50 Hz besitzt.

**Claims**

1. A process for manufacturing a laminated glazing unit (1) so that it withstands predetermined stresses, the laminated glazing unit comprising at least one substrate having a glass function (3, 5) of given chemical composition and at least one polymer interlayer (7) of given chemical composition ($c_i$), **characterized in that** it comprises steps in which:

- a reference laminated glazing unit is identified that withstands said predetermined stresses and that comprises at least one substrate and one interlayer having the same chemical compositions as those of the laminated glazing unit to be manufactured;
- the tear strength ($J_{c-ref}$) of the interlayer of the reference laminated glazing unit, the interlayer thickness ($e_{i-ref}$) of the reference laminated glazing unit and the substrate thickness ($e_{g-ref}$) of the reference laminated glazing unit are determined;
- using a graph ($C_1$, $C_2$, $C_3$, $C_4$) representative of the minimum interlayer tear strength ($J_{c-min}$) required so that any given laminated glazing unit, comprising at least one substrate and one interlayer having the same chemical compositions as those of the laminated glazing unit to be manufactured, withstands said predetermined stresses, as a function of the interlayer thickness ($e_i$) of said any given laminated glazing unit and/or of the substrate thickness ($e_g$) of said any given laminated glazing unit, a combination of optimum values ($e_{i-opt}$, $e_{g-opt}$) of the interlayer thickness and of the substrate thickness is deduced which corresponds to a value of the minimum required interlayer tear strength equal to the tear strength of the interlayer of the reference laminated glazing unit ($J_{c-min} = J_{c-ref}$);
- the laminated glazing unit (1) is sized with a chosen interlayer thickness ($e_{i-dim}$) greater than or equal to said optimum value of the interlayer thickness ($e_{i-opt}$) and a chosen substrate thickness ($e_{g-dim}$) greater than or equal to said optimum value of the substrate thickness ($e_{g-opt}$).

2. The process as claimed in claim 1, **characterized in that** the laminated glazing unit (1) is sized with a chosen substrate thickness equal to the substrate thickness of the reference laminated glazing unit ($e_{g-dim} - e_{g-ref}$) and **in that** the process comprises steps in which:

- using a graph ($C_1$, $C_2$, $C_3$) representative of the minimum interlayer tear strength ($J_{c-min}$) required so that any given laminated glazing unit, comprising at least one substrate and one interlayer having the same chemical compositions as those of the laminated glazing unit to be manufactured, withstands said predetermined stresses, as a function of the interlayer thickness ($e_i$) of said any given laminated glazing unit, this graph being established for a substrate thickness of said any given laminated glazing unit equal to the substrate thickness of the reference laminated glazing unit ($e_g = e_{g-ref}$), the minimum required interlayer thickness ($e_{i-min}$) is deduced which corresponds to a value of the minimum required interlayer tear strength equal to the tear strength of the interlayer of the reference laminated glazing unit ($J_{c-min} = J_{c-ref}$)
- the laminated glazing unit (1) is sized with a chosen interlayer thickness ($e_{i-dim}$) greater than or equal to said minimum required interlayer thickness ($e_{i-min}$) and a chosen substrate thickness ($e_{g-dim}$) equal to the substrate thickness of the reference laminated glazing unit ($e_{g-ref}$).

3. The process as claimed in claim 1, **characterized in that** the laminated glazing unit (1) is sized with a chosen interlayer thickness equal to the interlayer thickness of the reference laminated glazing unit ($e_{i-dim} - e_{i-ref}$) and **in that** the process comprises steps in which:

- using a graph representative of the minimum interlayer tear strength ($J_{c-min}$) required so that any given laminated glazing unit, comprising at least one substrate and one interlayer having the same chemical compositions as those of the laminated glazing unit to be manufactured, withstands said predetermined stresses, as a function of the substrate thickness ($e_g$) of said any given laminated glazing unit, this graph being established for an interlayer thickness of said any given laminated glazing unit equal to the interlayer thickness of the reference laminated glazing unit ($e_i = e_{i-ref}$), the minimum required substrate thickness ($e_{g-min}$) is deduced which corresponds to a value of the minimum required interlayer tear strength equal to the tear strength of the interlayer of the reference laminated glazing unit ($J_{c-min} = J_{c-ref}$);
- the laminated glazing unit (1) is sized with a chosen interlayer thickness ($e_{i-dim}$) equal to the interlayer thickness of the reference laminated glazing unit ($e_{i-ref}$) and a chosen substrate thickness ($e_{g-dim}$) greater than or equal to the minimum required substrate thickness ($e_{g-min}$).

4. The process as claimed in any one of the preceding claims, **characterized in that** at least one of the chosen thicknesses is strictly less than the corresponding thickness of the reference laminated glazing unit ($e_{i-dim} < e_{i-ref}$ and/or $e_{g-dim} < e_{g-ref}$).

5. The process as claimed in any one of the preceding claims, **characterized in that**, prior to the sizing of the laminated glazing unit (1) so that it withstands said predetermined stresses, the graph ($C_1$, $C_2$, $C_3$, $C_4$), representative of the minimum interlayer tear strength ($J_{c-min}$) required so that any given laminated glazing unit, comprising at least one substrate and one interlayer having the same chemical compositions as those of the laminated glazing unit to be manufactured, withstands said predetermined stresses, as a function of the interlayer thickness ($e_i$) of said any given laminated glazing unit and/or of the substrate thickness ($e_g$) of said any given laminated glazing unit, is plotted from mechanical strength tests carried out on laminated glazing units having different compositions in terms of interlayer thickness and/or of substrate thickness.

6. The process as claimed in any one of the preceding claims, **characterized in that**, prior to the sizing of the laminated glazing unit (1) so that it withstands said predetermined stresses, it is verified that the adhesion of the interlayer of the laminated glazing unit to be manufactured is satisfactory with respect to the substrate of this laminated glazing unit.

7. The process as claimed in claim 6, **characterized in that** it is verified that the adhesion of the interlayer of the laminated glazing unit to be manufactured is satisfactory with respect to the substrate of this laminated glazing unit by twisting a sample of the interlayer bonded to the substrate, by measuring the torsional force (F) at which separation of the interlayer from the substrate is initiated, by calculating from this force (F) the corresponding adhesion shear strength ($\tau$) and by comparing this value of the adhesion strength ($\tau$) with a range of admissible values so that any laminated glazing unit withstands said predetermined stresses.

8. The process as claimed in any one of the preceding claims, **characterized in that** the reference laminated glazing unit which withstands said predetermined stresses is identified by carrying out a mechanical strength test on the reference laminated glazing unit.

9. The process as claimed in any one of the preceding claims, **characterized in that** the tear strength ($J_{c-ref}$) of the interlayer of the reference glazing unit is determined using the Tielking method.

10. The process as claimed in any one of the preceding claims, **characterized in that**, prior to the sizing of the laminated glazing unit (1) so that it withstands said predetermined stresses, it is verified that the acoustic insulation properties of the interlayer of the laminated glazing unit to be manufactured are satisfactory.

11. The process as claimed in claim 10, **characterized in that** the acoustic insulation properties of the interlayer of the laminated glazing unit to be manufactured are satisfactory when the interlayer has a loss factor tan$\delta$ greater than 0.6 and a shear modulus G' less than $2 \times 10^7$ N/m$^2$ for a temperature of 20°C and a frequency of 50 Hz.

12. A laminated glazing unit obtained by the process as claimed in any one of claims 1 to 11, which is suitable for withstanding the stresses corresponding to class 1B1 of the EN 12600 standard and which comprises two glass substrates having a thickness of 3 mm and a PVB interlayer having a thickness $e_i$ such that 0.5 mm $\leq e_i \leq$ 0.74 mm bonded between the glass substrates.

13. A laminated glazing unit obtained by the process as claimed in any one of claims 1 to 11, which is suitable for withstanding the stresses corresponding to class 2B2 of the EN 12600 standard and which comprises two glass substrates having a thickness of 3 mm and a PVB interlayer having a thickness $e_i$ such that 0.25 mm $\leq e_i \leq$ 0.36 mm bonded between the glass substrates.

14. A laminated glazing unit obtained by the process as claimed in any one of claims 1 to 11, which is suitable for withstanding the stresses corresponding to the R43 standard and which comprises two glass substrates having respective thicknesses $e_{g1}$ = 1.8 mm and $e_{g2}$ = 1.4 mm and a PVB interlayer having a thickness $e_i$ such that 0.4 mm $\leq e_i \leq$ 0.74 mm bonded between the glass substrates.

15. The laminated glazing unit as claimed in any one of claims 12 to 14, wherein the interlayer has a loss factor tan$\delta$ greater than 0.6 and a shear modulus G' less than $2 \times 10^7$ N/m$^2$ for a temperature of 20°C and a frequency of 50 Hz.

**3** — **5**

**7**

**FIG.1**

**1**

Résistance à la déchirure (Jc-min) [J/m²]

25000

20000 — Jc-ref

15000 — C2

10000

5000

0 — ei-min — ei-ref

0,2   0,3   0,4   0,5   0,6   0,7   0,8

Epaisseur de l'intercalaire (ei) [mm]

C1

♦ classification 2B2
composition 33.x
adhésion comprise
entre 4MPa et
9,6MPa

≋ classification 1B1
composition 33.x
adhésion comprise
entre 3,1MPa et
6,8MPa

**FIG.2**

FIG.3

FIG.4

FIG.5

300

35

R

34

31

32

30

33

r

+

FIG.6

FIG.7

**EP 2 421 705 B1**

## RÉFÉRENCES CITÉES DANS LA DESCRIPTION

**Documents brevets cités dans la description**

- EP 1495305 A
- EP 1151855 A
- EP 0844075 A